# EUROPEAN PATENT APPLICATION

(11) **EP 1 850 625 A2**
(43) Date of publication of application: **31.10.2007**
(21) Application number: 07105421.7
(22) Date of filing: 02.04.2007
(51) Int. Cl.: H04Q 7/38

(54) **Method, apparatus and system for performing seamless roaming callback using GSM CAMEL**

(30) Priority: 03.04.2006 US 788069 P
(71) Applicant: Starhome GmbH, 8024 Zürich (CH)
(72) Inventor: Wolfman, Shlomo, 45257, Hod-HaSharon (IL)
(74) Representative: Weydert, Robert

(57) **Abstract**

System for automatic callback to a roaming user in response to the dialing of a destination number by the roaming user to connect the roaming user to the destination number without the expense of a mobile originated call, comprises: a roaming network based triggering unit for generating a trigger in response to the dialing of a destination number; a disconnection unit which disconnects the roaming user in the event of receiving the trigger, and a callback unit for placing a call between the caller and callee from the home network. Typically the call is made of two simultaneous calls one to each and connecting therebetween. The network based triggers may be Camel triggers.

## Description

### FIELD AND BACKGROUND OF THE INVENTION

The present invention relates to a callback service for roaming users and, more particularly, but not exclusively to such a callback service that is easier for the roaming user than existing solutions.

Mobile telephones are associated with home networks or at which they are registered. However the mobile telephone is not restricted to use at its home network only. Rather it can be used at its home networks and also outside the scope of its home network. Users of mobile telephones who travel abroad find themselves outside the scope of their home network, and the telephone simply finds another compatible network and continues to operate. Such use via another compatible network is referred to as roaming and the compatible network is referred to as the visited network or roaming network.

One of the problems with roaming is the high price. The home network has an interest in providing attractive prices to users because it wishes to obtain the maximum number of customers. However a roaming network has no such interest. Roaming users are not its direct customers, but rather are users who happen to need mobile services as they pass by and are automatically connected in. Thus the roaming network tends to set relatively high charges for roaming users. It is quite typical that seventy percent or more of the money paid by a roaming user for a roaming originated call goes to the roaming network and only the remaining thirty percent goes to the home network. On the other hand a home originated call to a user on a roaming network is typically cheaper to the user and a greater proportion of the money paid goes to the home network.

Consequently, the wiser mobile roamers know how to use call back methods in order to reduce the cost of roaming calls. The call back methods are typically offered by home cellular operators, or the enterprise they are working with. Sometimes users set up their own manual schemes such as calling and disconnecting, wherein the B-party (the receiver) has been primed to call them back.

In a method popular with corporate organizations, users are given a personal callback number. They dial the number and disconnect, and then the number calls them and asks them to dial their destination number. Such a method is reasonable for a corporate organization but it is not really scalable to a full cellular network due to the difficulty in providing everyone with a personal callback number.

One method which is currently available at certain networks is for the user to request a callback using a USSD message. The USSD message is automatically routed to the user's home location register HLR or another home network entity where it is recognized as a callback requested. The message is then forwarded to the network's callback server, which makes a two-way call, one to the roaming user and one to the destination.

The problem with the above method is that it is far from being transparent to the user. Sending such aUSSDis more than can be expected of many users. Improvements can simplify the sending of the USSDbut require a specific user interface, obtained through a lengthy menu system, and is still based on sending USSD messages to the home network. The problem with this method is that many users do not use their menuing systems. The majority of mobile telephone users do not in fact make use of most of the features on their telephones.

In order to solve the above problem a seamless method is provided based on a client application at the mobile telephone. The client application is placed on the mobile telephone which identifies a dialed number and disconnects the currently dialed call. The application then incorporates the dialed number into a USSD message which it sends to the home network to use in setting up a callback.

The above method is seamless in that the user dials as normal but then, instead of the telephone putting the call through, the number is seized by the application, a SIM applet or another handset-based application, such as a Symbian, a Brew or Microsoft Mobile application. The SIM applet then forwards a USSD message to the home network. The message includes the dialed number and when received, the home network makes two calls, one to the roaming user and one to the destination. The two calls are connected together and the user is able to speak to the destination without having to pay the high costs of a mobile originated call.

One difficulty with this and all the methods based on USSD is that some networks block USSD messages. Thus such methods do not always work and success depends on where the user is roaming at the time. The main difficulty with this solution, irrespective of what the network allows or forbids is is the deployment - the need for a client to be installed on the SIM card/handset. Users do not like to have to bring their telephones back to the shop in order to install the client.

There is thus a widely recognized need for, and it would be highly advantageous to have, a callback method for roaming users which is devoid of the above limitations. i.e. provide a seamless solution for callback, without the need to install an application at the mobile handset.

### SUMMARY OF THE INVENTION

According to one aspect of the present invention there is provided a system for automatic callback to a roaming user in response to the dialing of a destination number by said roaming user, the callback to connect said roaming user to the destination number without creating a mobile originated call, the system comprising:
a network based triggering unit for generating a trigger in response to said dialing of a destination number;
a disconnection unit configured for disconnecting said roaming user in the event of receiving said trigger, and
a callback unit for placing a call between said roaming user and said destination number, thereby providing said automatic callback.

According to a second aspect of the present invention there is provided apparatus located at a roaming network for automatic callback to a roaming user in response to the dialing of a destination number by said roaming user, the callback to connect said roaming user to the destination number without creating a mobile originated call, the system comprising:
a network based triggering unit for generating a trigger in response to said dialing of a destination number the trigger being directed to a disconnection unit configured for disconnecting said roaming user in the event of receiving said trigger, and further for operating a callback unit for placing a call between said roaming user and said destination number, thereby providing said automatic callback.

According to a third aspect of the present invention there is provided apparatus for location in association with a home network, for automatic callback to a roaming user in response to the dialing of a destination number by said roaming user, the callback to connect said roaming user to the destination number without creating a mobile originated call at said roaming network, the system comprising:
a disconnection unit configured for disconnecting said roaming user in the event of receiving a trigger from a network based triggering unit at said roaming network, and
a callback unit for placing a call between said roaming user and said destination number, thereby providing said automatic callback.

According to a fourth aspect of the present invention there is provided a method of providing a callback facility to a roaming user from a home network comprising at said home network:
setting a profile of said roaming user to cause a roaming network to generate a trigger on call setup to a dialed destination by said roaming user;
receiving said generated call setup trigger from said roaming user,
disconnecting a call initiated by said call setup, and
placing a call between said roaming user and said dialed destination, thereby providing said callback facility from said home network.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a simplified diagram illustrating a home and a roaming user and an infrastructure at the home network for use in a preferred embodiment of the present invention;
Fig. 2 is a simplified diagram illustrating the case of a roaming user calling another user at a network which is not the roaming user's home network;
Fig. 3 is a simplified flow chart illustrating a method for providing seamless callback to a roaming user based on triggers generated in a network, according to a preferred embodiment of the present invention.
Fig. 4a is a simplified diagram illustrating the case of a roaming user calling another user at his home network.
Fig. 4b is another simplified diagram, this time illustrating the case of the roaming user calling another user, this time at the same network in which he is roaming.

### DESCRIPTION OF THE PREFERRED EMBODIMENTS

The present embodiments comprise an apparatus and a method for roaming callback that is seamless to the user and does not depend on the availability of USSD messages in the present network or on the availability of a client at the user handset.

The user who desires callback facilities subscribes to the service, and the mobile operator updates his user profile in order to generate Camel triggers whenever he places a call. The Camel triggers then operate a callback feature which first of all tests whether callback will be useful for the given call. If callback is found to be useful then the current call is disconnected and a callback server then connects the user to the destination from the home network. Typically the callback server achieves such a connection by making two calls, one to the caller and one to the callee and subsequently connects between them.

The principles and operation of an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

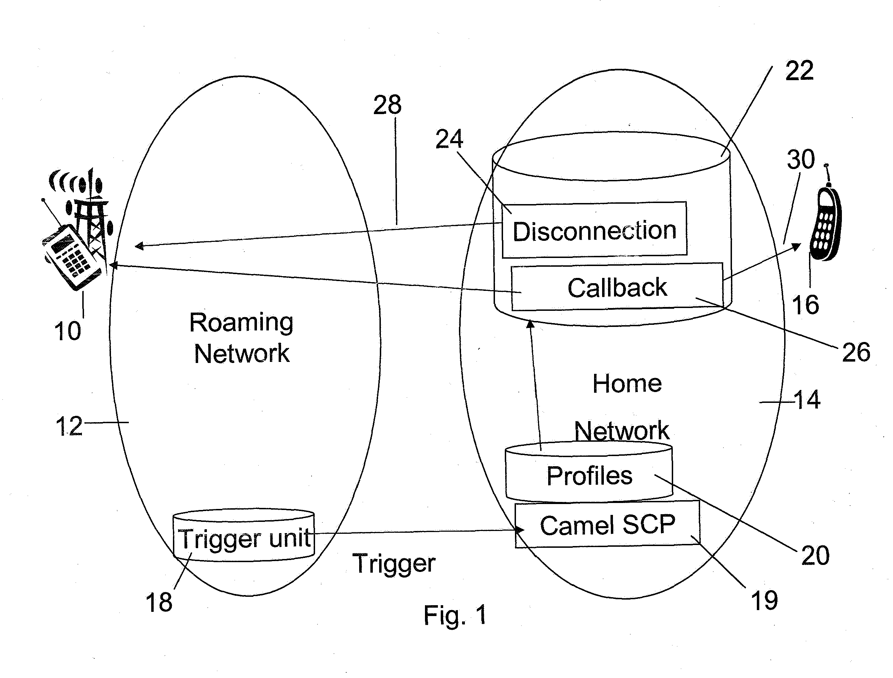

Reference is now made to Fig. 1, which illustrates a system for automatic callback to a roaming user in response to the dialing of a destination number by the roaming user. The caller 10 is currently located at roaming network 12, which is in turn connected to his home network 14. Caller 10 now wishes to place a call to a callee 16 who is for simplicity shown at the home network. A network based triggering unit 18 is present in the roaming network, and is typically a CAMEL SSP (service switching point). In particular, when a new roaming user arrives at network 12, the VLR at the roaming network obtains profile information of the user. If triggers are set for the user then the triggering unit generates a trigger in response to the caller 10 dialing a destination number, thus allowing the home network 14 to participate in control of the call. As well as Camel, other roaming infrastructure such as roaming gateways can generate triggers as necessary.

The trigger is passed to the home network which then provides the service required. To date the service usually required is prepaid service and thus such a trigger would be sent on to a prepaid unit which is intended to support service for prepaid users. In the present case however the trigger is delivered to a callback system.

Delivery may be direct in that the callback system is addressed directly by the home network on receipt of the trigger as will be explained in more detail below, or the trigger may be picked up by the callback system indirectly by monitoring the signaling connections to the home network, through which the trigger was passed. Monitoring of the signaling connections may be passive, via a probe, or via an active device such as a signaling relay. The signaling connections are typically SS7 connections.

In the direct forwarding method, the trigger is received, for example at the home network's Camel SCP 19 which is connected to profile unit 20. At profile unit 20 a locally held profile of the roaming user 10 is consulted. If set for prepaid then the prepaid unit is operated, but if the profile is set for callback then a callback server 22 is activated.

The callback server 22 includes a disconnection unit 24 which disconnects the roaming user. The callback server further includes a callback unit 26 which proceeds to make the callback. In one embodiment the callback comprises placing simultaneous calls 28 and 30 to the roaming user 10 and the destination number, that is the callee 16. The two calls are connected together so that the two simultaneous calls make up the automatic callback. That is to say the caller can speak to the callee in a call that originated at the home network and is consequently much cheaper.

The user profile may indicate two or more services that are required in response to the CAMEL trigger, say callback and VPN (virtual private network). In such a case the CAMEL SCP may be programmed to pass the trigger to each of the appropriate destinations. One way of doing this is to have a CAMEL service broker, a software agent which actually receives the trigger and then produces a new trigger for each service required. Another way is to provide each service one after the other.

As mentioned, roaming user 10 has a user profile at his home network, and the trigger is passed on to the callback server in accordance with a callback requirement placed in the user profile. The user profile may be modified by request of the roaming user, to indicate that he requires the callback service.

The network based triggering unit 18 is here illustrated located at the roaming network 12, as would be the case with a CAMEL SSP, although it may alternatively be located in a roaming gateway associated with the roaming network.

Disconnection unit 24 is typically located in association with home network 14.

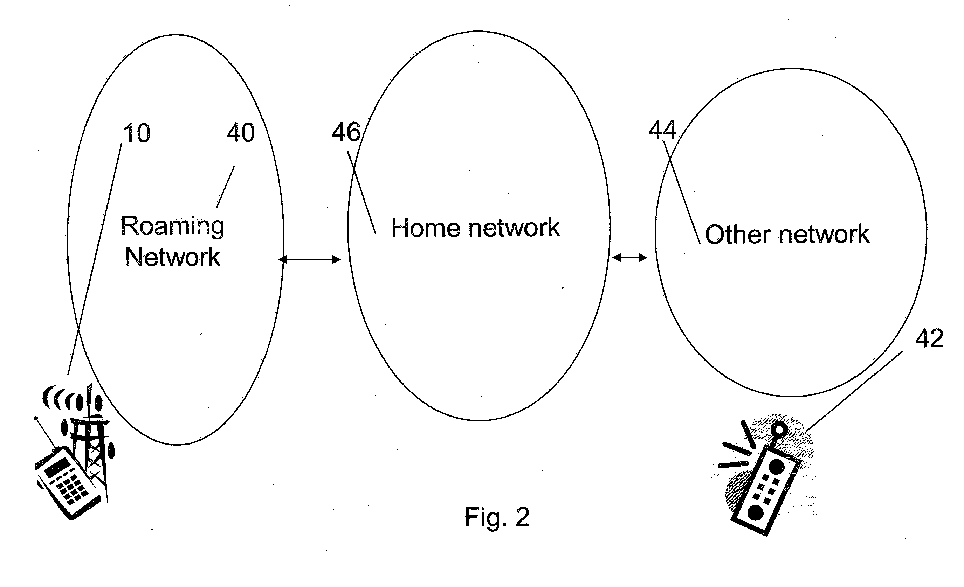

Referring now to Fig. 2, the disconnection unit may be configured with processor logic to analyze both the current roaming location and the destination number in order to determine whether automatic callback is required. In Fig. 2 the roaming user 10 connects to roaming network 40 and dials the number of another user 42, typically connected to another network 44 although he could be connected to the same network. The system preferably uses logic to determine whether the roaming network is in fact CAMEL enabled so that the triggering system can be used, since not all networks are CAMEL enabled..

In operation, the callback server obtains either or both of the current roaming location and the destination number from the trigger itself, so as to be able to make a decision about whether to operate the disconnection and callback units or not. This implies that the trigger generating unit is able to insert the source information and destination number into the trigger. In the case of a Camel trigger this occurs automatically.

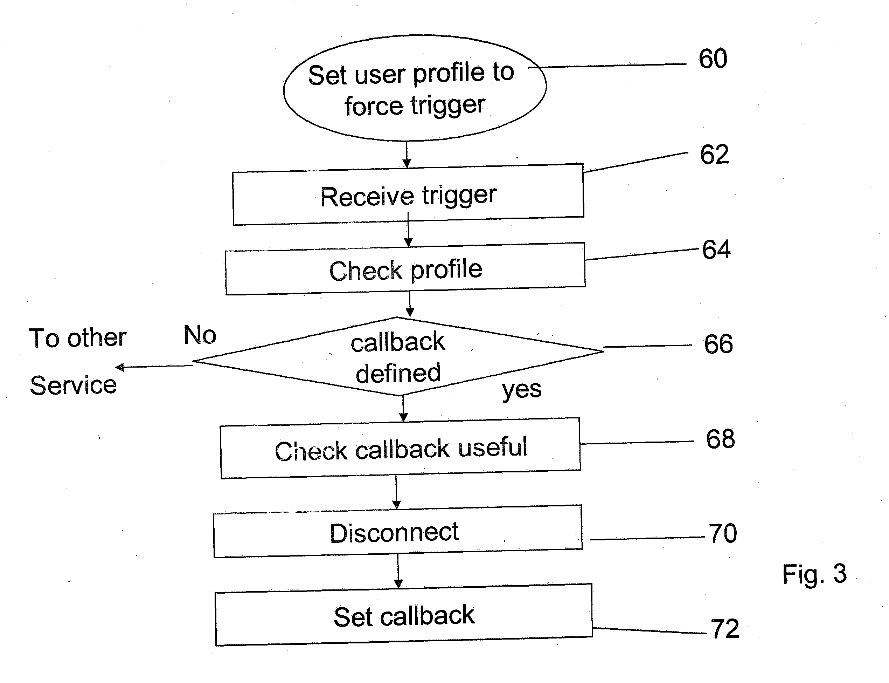

Reference is now made to Fig. 3, which is a simplified diagram illustrating the operation of a callback procedure at the home network according to a preferred embodiment of the present invention.

Initially in stage 60, a user profile is set to force the roaming network to issue a trigger when roaming use occurs. The profile details are forwarded to the roaming network as the user initially registers at the roaming network. Such a trigger may be set whenever a service from the home network is required. Setting of Camel triggers is routinely carried out for prepaid users.

Then, when the roaming user initiates a call while roaming, a trigger is issued. The home network receives the trigger in stage 62. The user's profile is checked to see what services he has defined for himself in stage 64. Until the profile is checked it is not necessarily clear as to what service the trigger was set for, so it is necessary to check that callback is in fact required.

If, the callback is found to be defined in the profile - decision box 66, then the flow continues to the callback service. If not then the flow is diverted to any other service that may have been defined.

In the even that callback is defined, then in stage 68 the system logic checks that a callback is required. That is to say would using callback actually be cheaper? If so then the call that initially forms as part of the call setup initiated by the roaming user is disconnected in stage 70. In stage 72 a new call is set up at the home network between the roaming user and the dialed destination. Typically two calls are placed, one towards the caller and one towards the dialed destination and the two calls are then connected together.

The present embodiments are now considered in greater detail. There is preferably provided seamless callback for roaming, means a callback which occurs without any user intervention. The user is merely required to dial the destination number in the normal way and the present embodiment converts the call originating at the roaming network into a callback originating at the home network. The service preferably is requested by the subscriber. The user opts in to the service via various available means, including the call center of the home network, by replying to an SMS message while in roaming, via web-based self provisioning, or by visiting the network service center etc.

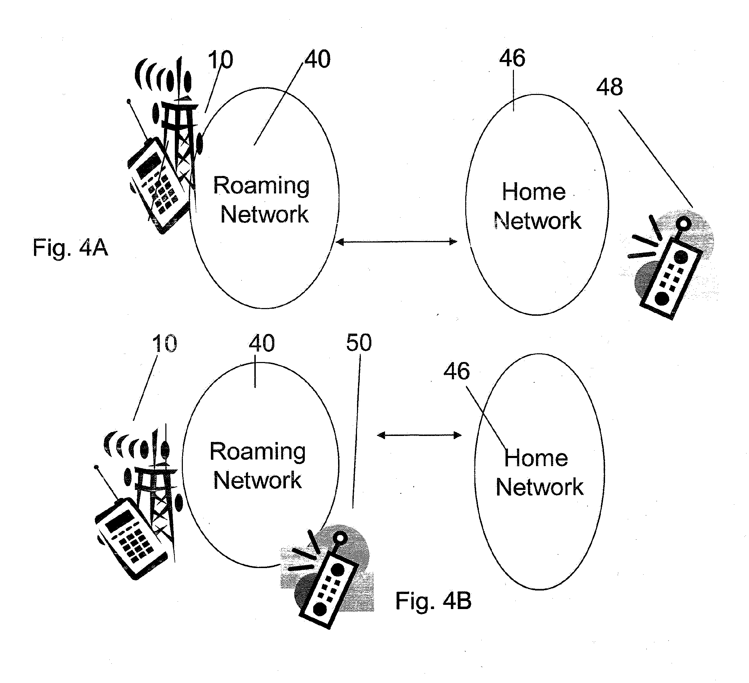

As explained above in respect of Figs 2, 4a and 4b, the present embodiments do not turn every call into a call back unless this is the user preference and the roaming unit is a CAMEL-enabled network. The system rather determines if the cost of the call back is less than the cost of the normal call, and callback is then used only if found to be economical. It is noted that different networks have different tariffs and different charging strategies and thus the logic is preferably customized for individual roaming networks.

The seamless callback service may be combined with other roaming caller services, for example Intelligent Call Assistance, which helps the user to complete the call in case the number is erroneous in respect of the current roaming network. For example, the user may attempt to dial a number from her personal phone book, not realizing that now International codes are required. Thus the number as actually dialed cannot be completed from the visited network. The present embodiments place the callback from the home network so that in fact the number in the phone book can be dialed. In effect, the intelligent call assistance has brought about a dialing result as if adjusting the dialed number into a full international number, adding the international prefix and country code of the home network, and then letting the call continue to its destination. Call correction ability is also taught in US patent 6,920, 827, and EP 1111945.

The present embodiments implement seamless callback for roaming, preferably by using CAMEL and the triggering system provided by CAMEL. CAMEL is the GSM standard for inter-network communication for roaming purposes. The visited network (VPMN) and the home network (HPMN) typically currently use CAMEL for providing roaming services to the user, such as roaming prepaid. The roaming prepaid issue is a major issue for the GSM market. Prepaid users, while in roaming, have not in the past being able obtain service from the visited network in the past, because their prepaid account could not be charged in real time by the visited network. One solution for the prepaid issue was the USSD call back mechanism. As explained in the background the user could send a USSD message to the home network. Sending a USSD message is typically free of charge. Then the home network creates a call back on behalf of the user, charging his prepaid account at home, so that the roaming network never has to become involved in his account details.

A second solution for the prepaid user is based on the CAMEL standard. While the roamer places an MO (Mobile Originated) call, a CAMEL trigger is sent to the home network. The home network responds to the trigger by checking the user's balance. If the balance is sufficient then the home network approves call completion by replying to the trigger. The visited network proceeds with the call, but exchanges charging information with the home network during the call, via CAMEL in order to perform the actual charging on the fly. In order for the CAMEL solution to work both networks need to install CAMEL, and sign a CAMEL agreement between them. As of today, most mobile networks in Europe at least have CAMEL, and most of the roaming prepaid market in Europe is covered by CAMEL agreements.

A preferred embodiment of the present invention teaches how to implement Seamless Call Back, using CAMEL.

The system implementing the presently described service is installed at the home mobile network. The system is connected to the MAP or SS7 signaling links, and is able to send MAP messages to the visited networks. The system is then able to monitor the roaming traffic using an SS7 probe, as already described in previous Starhome patents and applications, including US 11/056,150. The system is able to set CAMEL triggers in the visited network, for roaming subscribers who may not currently have CAMEL triggers at all, for example most post paid subscribers, or the system may modify existing CAMEL triggers for users who already have CAMEL triggers. The result of setting or modifying the CAMEL triggers is the receiving of the MO (Mobile originated) trigger by the callback system, while the roamer places a call. The technique of placing or modifying CAMEL triggers is described in several Starhome applications, for example US 11/190,930 and EP 1622403.

The present embodiments receive the CAMEL trigger at the callback system installed at the home network, and then perform tasks as follows
1. Determine whether the call should be turned into a callback, based on the user preferences and the analysis of the source and destination addresses, stage 68 in Fig. 3. Perhaps the situation is that of Fig. 4b and call back is not worthwhile under the specific conditions, as explained, or it is possible that the network is not CAMEL enabled. in the following.
2. If call back is preferred, then as per stage 70 the system disconnects the current call by sending a disconnect instruction back to the visited network, using a CAMEL reply to the IDP message. The IDP or Initial Detection point message in CAP is an expanded version of the IDP message in INAP, and adds mobility related elements such as the IMSI of the calling party and the address of the Mobile Switching Center (MSC) that the calling party is attached to.
3. The disconnect event may be followed by a prompt announcement. Such a prompt may be supported by the CAMEL infrastructure.
4. Set up the callback - stage 72. In this stage the home network places a call back on behalf of the user. That is, the home network, and specifically the callback system, places two telephony calls, one to the calling A-party user herself, the second to the destination, as done by call back systems in general. Both calls are placed on behalf of the user, i.e. via the home network charging system, which is capable of charging the user account (either a prepaid or a postpaid account), again as done by callback systems in general. It is noted that if the B-party or callee is roaming as well, then the B party has to pay her roaming leg, as usual.
5. As an option, if the number is erroneous in respect of the visited network, such as in the case of phone book dialing, dialing a home number from the phone book address, the system automatically corrects the number, as described hereinabove.

The mobile roamer thus has a Seamless Callback service, without any specific user interface, without the need to have a specific application installed on his mobile device, without the need for different dialing instructions then the ones she is used to.

Fig. 4a shows the conventional case in which the roaming user 10 connects via roaming network 40 to user 48 connected to his home network 46. The consideration whether to use a callback or not, from the financial point of view, may differ from the case described by Fig. 2, where the destination is external to the home network.

Fig. 4b shows the case where both caller 42 and callee 50 are located on the same roaming network. In this case the caller is conventionally reached via two international legs, to and from the home network. However in some more up to date systems the user may be connected directly, via a local call and thus the callback would simply introduce two superfluous International legs. Logic in the callback system thus preferably prevents operation of the callback in these circumstances. However the logic needs to be network dependent. In some cases, especially if the callee 50 is also roaming in network 40, then the default approach may be to connect from the roaming network to the home network and back again. In this case callback is preferred. If the callee is a home user of network 40 then most networks would simply connect the roaming user via a local call, and in this case callback would be superfluous.

It is expected that during the life of this patent many relevant devices and systems will be developed and the scope of the terms herein, particularly of the terms "roaming", "Camel", "SS7", "Camel SCP", is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. System for automatic callback to a roaming user in response to the dialing of a destination number by said roaming user, the callback to connect said roaming user to the destination number without creating a mobile originated call, the system comprising:
a network based triggering unit for generating a trigger in response to said dialing of a destination number;
a disconnection unit configured for disconnecting said roaming user in the event of receiving said trigger, and
a callback unit for placing a call between said roaming user and said destination number, thereby providing said automatic callback.

2. The system of claim 1, wherein said callback unit is configured such that said placing a call comprises placing simultaneous calls to said roaming user and said destination number and connecting therebetween.

3. System according to claim 1 or claim 2, wherein said trigger is a CAMEL trigger.

4. System according to claim 1, 2, or 3, wherein said roaming user has a user profile at a respective home network and wherein said network-based triggering unit is configured to generate said trigger in accordance with a callback requirement placed in said user profile.

5. System according to claim 1, 2, 3 or 4, wherein said network based triggering unit is located at a roaming network of said roaming user.

6. System according to any preceding claim, wherein said network based triggering unit is a CAMEL service switching point (SSP).

7. System according to any preceding claim, wherein said disconnection unit is located in association with a home network of said roaming user.

8. System according to any preceding claim, wherein said disconnection unit is configured with processor logic to analyze a current roaming location and said destination number to determine whether said automatic callback is required.

9. System according to any preceding claim, wherein said disconnection unit is configured to obtain at least one of said current roaming location and said destination number from said trigger.

10. System according to any preceding claim, wherein said network based triggering unit is configured to insert said destination number into said trigger.

11. System according to any preceding claim, wherein said callback unit is configured to obtain said destination number from said trigger.

12. Apparatus located at a roaming network for automatic callback to a roaming user in response to the dialing of a destination number by said roaming user, the callback to connect said roaming user to the destination number without creating a mobile originated call, the system comprising:
a network based triggering unit for generating a trigger in response to said dialing of a destination number the trigger being directed to a disconnection unit configured for disconnecting said roaming user in the event of receiving said trigger, and further for operating a callback unit for placing a call between said roaming user and said destination number, thereby providing said automatic callback.

13. Apparatus according to claim 12, wherein said trigger is a CAMEL trigger.

14. Apparatus according to claim 12 or claim 13, wherein said triggering unit is a CAMEL service switching point (SSP).

15. Apparatus according to claim 12, 13 or 14, wherein said roaming user has a user profile at a respective home network and wherein said network-based triggering unit is configured to generate said trigger in accordance with a callback requirement placed in said user profile.

16. Apparatus according to any one of claims 12 - 15, wherein said network based triggering unit is configured to insert said destination number into said trigger.

17. Apparatus for location in association with a home network, for automatic callback to a roaming user in response to the dialing of a destination number by said roaming user, the callback to connect said roaming user to the destination number without creating a mobile originated call at said roaming network, the system comprising:
a disconnection unit configured for disconnecting said roaming user in the event of receiving a trigger from a network based triggering unit at said roaming network, and
a callback unit for placing a call between said roaming user and said destination number, thereby providing said automatic callback.

18. Apparatus according to claim 17, wherein said callback unit is configured such that said placing a call comprises placing simultaneous calls to said roaming user and said destination number and connecting therebetween.

19. Apparatus according to claim 17, or claim 18, wherein said trigger is a CAMEL trigger.

20. Apparatus according to claim 17, 18 or 19, wherein said roaming user has a user profile at a respective home network and wherein said network-based triggering unit is configured to generate said trigger in accordance with a callback requirement placed in said user profile.

21. Apparatus according to any one of claims 17 - 20, wherein said disconnection unit is configured with processor logic to analyze a current roaming location and said destination number to determine whether said automatic callback is required.

22. Apparatus according to claim 21, wherein said disconnection unit is configured to obtain said current roaming location and said destination number from said trigger.

23. Apparatus according to any one of claims 17 - 22, wherein said callback unit is configured to obtain said destination number from said trigger.

24. A method of providing a callback facility to a roaming user from a home network comprising at said home network:
setting a profile of said roaming user to cause a roaming network to generate a trigger on call setup to a dialed destination by said roaming user;
receiving said generated call setup trigger from said roaming user,
disconnecting a call initiated by said call setup, and
placing a call between said roaming user and said dialed destination, thereby providing said callback facility from said home network.

25. The method of claim 24, wherein said placing a call comprising:
placing a first call to said roaming user,
placing a second call to said dialed destination, and
connecting therebetween.

26. The method of claim 24 or 25, wherein said disconnecting is preceded by checking said user profile to ensure that callback is defined.
